# EUROPEAN PATENT APPLICATION

(11) **EP 4 525 175 A1**
(43) Date of publication of application: **19.03.2025**
(21) Application number: 23843299.1
(22) Date of filing: 17.07.2023
(51) Int. Cl.: H01M 50/383, H01M 50/211, H01M 50/502, H01M 50/531, H01M 50/249

(54) **BATTERY PACK AND BATTERY MODULE**

(30) Priority: 20.07.2022 KR 20220089575; 14.07.2023 KR 20230091932
(71) Applicant: LG Energy Solution, Ltd., Seoul 07335 (KR)
(72) Inventor: PARK, Jeonghoon, Daejeon 34122 (KR); SHIN, Jin Kyu, Daejeon 34122 (KR); KIM, Soo Youl, Daejeon 34122 (KR); HEO, Samhoe, Daejeon 34122 (KR); JUNG, Hyemi, Daejeon 34122 (KR)
(74) Representative: Plasseraud IP
(86) International application number: PCT/KR2023/010184
(87) International publication number: WO 2024/019451

(57) **Abstract**

The present disclosure provides a battery pack, etc. that can ensure excellent safety when a thermal event occurs. A battery pack according to one aspect of the present disclosure may include a plurality of battery cells each having an electrode lead; a cell cover configured to at least partially surround at least some of the plurality of battery cells; and a busbar frame assembly configured to be electrically connected to the electrode lead and coupled to at least one side of a cell cover, thereby blocking flame discharge in a particular direction.

## Description

### [TECHNICAL FIELD]

### Cross Citation with Related Application(s)

This application claims the benefit of Korean Patent Application No. 10-2022-0089575 filed on July 20, 2022 and Korean Patent Application No. 10-2023-0091932 filed on July 14, 2023 in the Korean Intellectual Property Office, the disclosures of which are incorporated herein by reference in their entirety.

The present disclosure relates to a battery pack and an automobile containing the same, etc. and more particularly, to a battery pack and a battery module having excellent safety against thermal events, and an automobile containing the same, etc.

### [BACKGROUND]

As technology development and demands for various mobile devices, electric vehicles, energy storage systems (ESS), etc. increase greatly, interest and demand for secondary batteries as energy sources is rapidly increasing. Conventionally, nickel cadmium batteries or nickel hydride batteries hardly exhibiting memory effects compared to nickel-based secondary batteries and thus being freely charged and discharged, and having very low self-discharge rate and high energy density are often used.

Such a lithium secondary battery mainly uses a lithium-based oxide and a carbonaceous material as a cathode active material and an anode active material, respectively. The lithium secondary battery includes an electrode assembly in which a cathode plate and an anode plate, each being coated with the cathode active material and the anode active material, are disposed with a separator being interposed therebetween, and an exterior material, i.e., a battery case, that seals and houses the electrode assembly together with the electrolyte.

Generally, the lithium secondary battery may be classified into a can-type secondary battery in which the electrode assembly is mounted in a metal can, and a pouch-type secondary battery in which the electrode assembly is mounted in a pouch of an aluminum laminate sheet, depending on the shape of the exterior material.

In recent years, battery packs are widely used for driving or energy storage in medium- and large-sized devices such as electric vehicles and energy storage systems. A conventional battery pack includes one or more battery modules inside the pack case and a control unit for controlling charge/discharge of the battery pack, such as a BMS (Battery Management System). Here, the battery module is configured to include a plurality of battery cells inside a module case. That is, in the case of a conventional battery pack, a plurality of battery cells (secondary batteries) are housed inside a module case to configure each battery module, and such battery modules are housed inside one or more pack cases to configure a battery pack.

In particular, pouch-type batteries have advantages in various aspects, such as being light in weight and requiring little dead space during stacking, but has the problem of being vulnerable to external shocks, and deteriorating in the ease of assembly. Therefore, it is common to manufacture a battery pack by first modularizing a number of cells and then housing them inside a pack case.

However, in the case of a conventional battery pack, it may be disadvantageous in terms of energy density, easy of assembly, cooling performance, etc. due to modularization. Additionally, the conventional battery pack or battery module may be vulnerable to thermal events. Particularly, if a thermal event occurs inside a battery module or battery pack, thermal runaway may occur, which causes flames and in worst case an explosion.

### [DETAILED DESCRIPTION OF THE INVENTION]

### [Technical Problem]

Therefore, the present disclosure was designed to solve the problems as above, and an object of the present disclosure is to provide a battery pack and a battery module, etc. that can ensure excellent safety when a thermal event occurs.

However, the objects and advantages of the present disclosure are not limited to those described above, and other objects and advantages not mentioned above will be clearly understood by those skilled in the art from the following description.

### [Technical Solution]

According to one aspect of the present disclosure, there is provided a battery pack comprising: a plurality of battery cells each having an electrode lead; a cell cover configured to at least partially surround at least some of the plurality of battery cells; and a busbar frame assembly configured to be electrically connected to the electrode lead and coupled to at least one side of a cell cover, thereby blocking flame discharge in a particular direction.

Here, the busbar frame assembly may comprise a busbar electrode that is composed of an electrically conductive material and comes into direct contact with the electrode leads, a busbar housing that is composed of an electrically insulating material and supports the busbar electrode, and a blocking member that is composed of a material with a higher melting point than the busbar housing and is located on one side of the busbar housing to block flame discharge.

Also, the blocking member may comprise a main body that blocks discharge of flame in a horizontal direction, and an extension part that is bent from an upper end of the main body toward the cell cover.

Further, the cell cover may be configured to surround both sides and upper corners of at least some of the battery cells.

Further, the cell cover and busbar frame assembly may be configured so that the venting gas inside is discharged in a lower direction.

In addition, the battery pack according to the present disclosure may further comprise a pack case that houses multiple battery cells, cell covers, and busbar frame assemblies in its internal space.

Here, the pack case may be formed with a venting hole at the bottom part for discharging a venting gas inside the cell cover.

Additionally, the battery pack according to the present disclosure may further include a control module configured to control charge/discharge of battery cells.

Moreover, the battery module according to another aspect of the present disclosure is a battery module that is housed by at least one in an internal space of a pack case, wherein the battery module may comprise a plurality of battery cells each having an electrode lead; a cell cover provided to at least partially surround at least some battery cells among the plurality of battery cells; a busbar frame assembly configured to be electrically connected to the electrode lead and coupled to at least one side of the cell cover to block flame discharge in a particular direction; and a module case that houses a plurality of battery cells and cell covers in its internal space.

Here, the module case is configured in a form in which at least a portion is open, and the busbar frame assembly may be configured to be coupled to an opening part of the module case.

Additionally, according to another aspect of the present disclosure, there may be provided an automobile comprising a battery pack or battery module according to the present disclosure.

According to one embodiment of the present disclosure, there can be provided a battery pack comprising: a plurality of battery cells stacked in one direction; a pack case that houses the battery cells in its internal space; a cell cover that at least partially surrounds at least some of the plurality of battery cells in the internal space of the pack case; and a busbar frame assembly disposed on at least one open side of the cell cover, wherein the busbar frame assembly comprises a blocking member that blocks venting gas from being discharged from the battery cells.

The venting gas is discharged to a surface that is not blocked by the blocking member among the open surface of the cell cover.

The blocking member has a bent shape, and may comprise a main body disposed on the least one open side of the cell cover, and an extension part that covers an end of the cell cover.

The cell cover and the extension part of the blocking member may overlap, thereby preventing the venting gas from being discharged through a gap between the cell cover and the busbar frame assembly.

The busbar frame assembly further comprises a busbar electrode electrically coupled to the electrode lead of the battery cell, and a busbar housing that supports the busbar electrode, and the blocking member may be mounted on the outer surface of the busbar housing.

The cell cover comprises a pair of first cover parts that cover both opposing sides of at least some of the battery cells, and a second cover part that connects between the pair of first cover parts and covers either an upper surface or a lower surface of the at least some of the battery cells.

The busbar frame assembly is disposed on at least one of a front surface and a rear surface of the battery cell, and the blocking member may comprise a main body disposed on at least one of the front surface and the rear surface of the battery cell, and an extension part that covers an end of the second cover part of the cell cover.

The blocking member may further comprise an extension part that covers an end of the first cover part of the cell cover.

The pack case comprises at least one venting hole for discharging the venting gas, and the venting hole may be provided on the surface side where the cell cover is opened among the upper surface and the lower surface of the pack case.

The cell cover and the group of battery cells housed in the cell cover are formed in a plurality of numbers to be mounted in the inner space of the pack case, and one busbar frame assembly may be disposed on at least one open side of the plurality of cell covers, respectively.

The blocking member may have an L-shaped cross section when viewed from the side surface.

The cell cover may have an n-shaped or u-shaped cross section when viewed from the front.

According to one embodiment of the present disclosure, there can be provided a battery module comprising: a plurality of battery cells stacked in one direction; a module case that houses the battery cells in its internal space; a cell cover that at least partially surrounds at least some of the plurality of battery cells in the internal space of the pack case; and a busbar frame assembly disposed on at least one open side of the cell cover, wherein the busbar frame assembly comprises a blocking member that blocks venting gas from being discharged from the battery cells.

### [Advantageous Effects]

According to one aspect of the present disclosure, a plurality of battery cells can be stably housed inside a pack case or module case without the need for a stacking frame such as a plastic cartridge or a separate module case.

Moreover, according to one aspect of the present disclosure, a pouch-type battery cell with a ductile material case can be easily made into a sturdy form, thereby more easily realizing a structure in which the components are stacked directly inside the pack case. Therefore, it is possible to improve the ease of assembly and mechanical stability of the battery pack or battery module.

Further, according to one aspect of the present disclosure, when thermal runaway occurs in a particular battery cell, it is possible to effectively cope with a thermal event. In particular, in the case of the present disclosure, among the three elements (fuel, oxygen, and ignition source) that generate a flame, it is possible to block or appropriately control the accumulation or discharge of heat corresponding to the ignition source. Moreover, in the case of the present disclosure, in order to block heat accumulation and prevent flame discharge, it is possible to realize venting gas discharge control, directional venting, flame shutoff, and the like.

In particular, according to one embodiment of the present disclosure, directional venting is performed in a lower direction, thereby capable of improving the safety of users such as passengers located on the upper side.

Further, according to one aspect of the present disclosure, it is possible to prevent internal short circuits or structural collapse even when a thermal event occurs. In particular, in the case of the present disclosure, when a thermal event occurs, high-pressure gas and high-temperature dust are ejected into the gap where the busbar frame assembly is located, thereby being able to more effectively prevent problems that cause collapse of various structures, such as busbar frame assemblies, top plates, and end plates.

Moreover, according to one embodiment of the present disclosure, based on the battery cell, five-sided partition separation where the upper part and four side parts are blocked can prevent heat/flame propagation between cells and suppress discharge of flames, etc.

Additionally, according to one aspect of the present disclosure, the module case, etc. can be eliminated by a CTP (Cell To Pack) concept, thereby improving cooling performance and energy density.

In addition, the present disclosure may have various other effects, which will be described in each embodiment, or the description of effects that can be easily inferred by those skilled in the art will be omitted.

### [BRIEF DESCRIPTION OF THE DRAWINGS]

The accompanying drawings illustrate preferred embodiments of the present disclosure and, together with the foregoing disclosure, serve to provide further understanding of the technical spirit of the present disclosure. However, the present disclosure is not to be construed as being limited to the drawings.
FIG. 1 is a perspective view which schematically illustrates some configurations of a battery pack according to an embodiment of the present disclosure;
FIG. 2 is a cross-sectional view which schematically illustrates the cell module assembly of FIG. 1;
FIG. 3 is a perspective view which schematically illustrates the configuration of a cell cover included in a battery pack according to an embodiment of the present disclosure;
FIG. 4 is an exploded perspective view of a partial configuration of the battery pack of FIG. 1;
FIG. 5 is a partial enlarged view of FIG. 4;
FIGS. 6 and 7 are each an exploded perspective view of some components of FIG. 4;
FIG. 8 illustrates the front busbar frame assembly of the battery pack of FIG. 1;
FIG. 9 is an exploded perspective view of some components of FIG. 8;
FIG. 10 illustrates the rear busbar frame assembly of the battery pack of FIG. 1;
FIG. 11 is a perspective view which schematically illustrates a partial configuration of an embodiment in which the blocking member of FIG. 8 is modified as another embodiment of the present disclosure;
FIG. 12 is a diagram schematically illustrating the pack case configuration of a battery pack according to an embodiment of the present disclosure;
FIG. 13 is a bottom view of a partial configuration of a pack case according to an embodiment of the present disclosure;
FIG. 14 is a diagram schematically illustrating directional venting in a battery module according to an embodiment of the present disclosure; and
FIG. 15 is a diagram illustrating the lower surface of a battery module according to an embodiment of the present disclosure.

### [DETAILED DESCRIPTION OF THE EMBODIMENTS]

Preferred embodiment of the present disclosure will now be described in detail with reference to the accompanying drawings. It should be understood that terms and words used in the specification and the appended claims should not be construed as having common and dictionary meanings, but should be interpreted as having meanings and concepts coinciding technical ideas of the present disclosure based on the principle that the inventors can properly define the concepts of the terms and words in order to describe his/her own invention as best as possible. Therefore, embodiments described in the specification and the configurations shown in the drawings are not more than the most exemplary embodiments of the present disclosure and do not fully cover the spirit of the present disclosure. Accordingly, it should be understood that there may be various equivalents and modifications that can replace those when this application is filed.

In the drawings, the dimension of each of components or a specific portion constituting the component is exaggerated, omitted, or schematically illustrated for convenience in description and clarity. Thus, the dimension of each element does not entirely reflect an actual size. Moreover, detailed descriptions related to well-known functions or configurations will be ruled out in order not to unnecessarily obscure subject matters of the invention.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

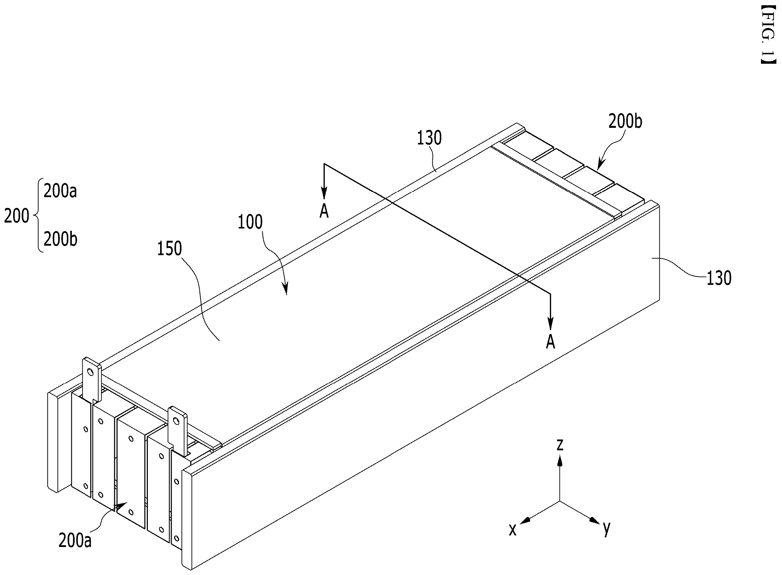

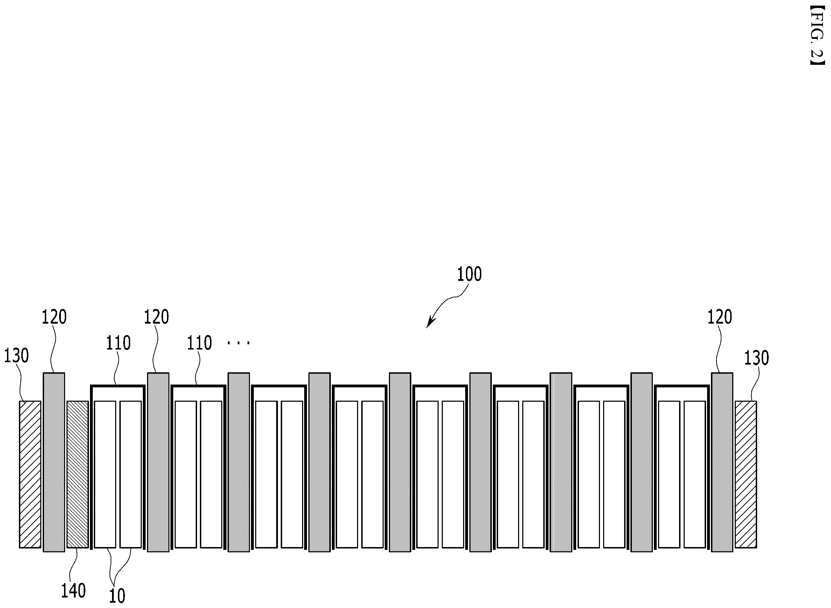

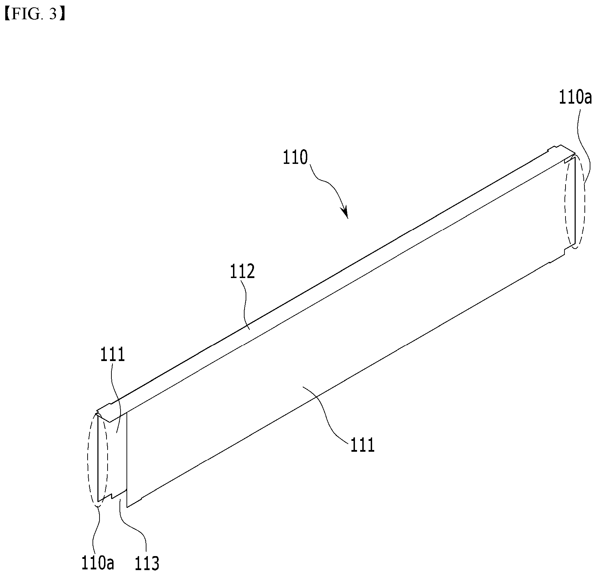

FIG. 1 is a perspective view which schematically illustrates some configurations of a battery pack according to an embodiment of the present disclosure. FIG. 2 is a cross-sectional view which schematically illustrates the cell module assembly of FIG. 1. FIG. 3 is a perspective view which schematically illustrates the configuration of a cell cover included in a battery pack according to an embodiment of the present disclosure.

Referring to FIG. 1, the battery pack 1000 according to the present disclosure may comprise a cell module assembly 100 including a plurality of battery cells 10 and a cell cover 110 (see FIGS. 2 and 3) and a busbar frame assembly 200.

The battery cell 10 is, for example, a pouch-type secondary battery, and may include an electrode assembly, an electrolyte, and a pouch exterior material that houses them therein. A plurality of such battery cells 10 may be included in a battery pack. Such a plurality of battery cells 10 may be stacked in at least one direction. A resin layer 150 may be further provided on each of the upper and lower surfaces of the cell module assembly 100.

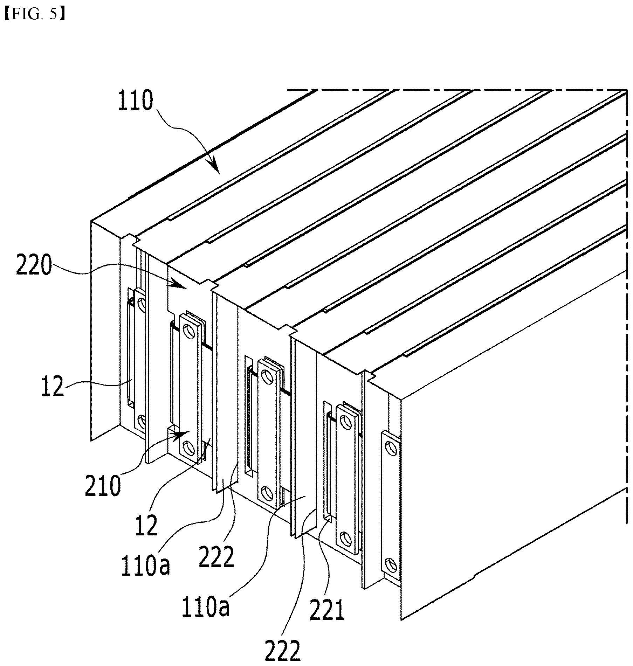

Additionally, each battery cell 10 may be provided with an electrode lead 12 (see FIG. 5) on at least one side. For example, the battery cell 10 may be provided with electrode leads 12 (see FIG. 5) on both sides (in the front and back directions), respectively. Accordingly, a case in which busbar frame assemblies 200 are provided on both sides (in the front and rear directions) of the cell module assembly 100 is illustrated. Hereinafter, the front busbar frame assembly 200a and the rear busbar frame assembly 200b are collectively referred to as drawing number "200" for convenience.

FIG. 2 is a cross-sectional view which schematically illustrates the cell module assembly of FIG. 1, and illustrates a cross section along the line A-A of FIG. 1. Referring to FIG. 2, the cell cover 110 may be provided to at least partially surround at least some battery cells 10 among the plurality of battery cells 10. For example, the cell cover 110 may be configured to at least partially surround one or a plurality of battery cells 10. In one example, as shown in FIG. 2, one cell cover 110 may be configured to surround two battery cells 10. On the other hand, each cell group surrounded by the cell cover 110 may be expressed as a cell bank or a cell unit. Moreover, a plurality of cell covers 110 may be included in one battery pack. The cell cover 110 will be described in detail later with reference to FIG. 3, and the like.

Further, the battery pack according to the present disclosure may include a thermal barrier 120, as shown in FIG. 2. The thermal barrier 120 may be configured in the form of a pad made of an insulating material, and may be interposed between adjacent cell covers 110. In some cases, it may be housed within one cell cover 110, and may also be interposed between adjacent battery cells 10. The thermal barrier 120 may be formed to have a thickness of, for example, 0.05t to 4t or, for example, 2.0t.

Further, the battery pack according to the present disclosure may include an insulating pad 130 at the outermost side in the stacking direction of a cell assembly formed by stacking a plurality of cell covers 110 and a plurality of battery cells 10 as shown in FIG. 2. The insulating pad 130 may be made of a material such as GFRP, and may be formed to have a thickness of, for example, 0.05t to 1t or, for example, 0.35t.

Furthermore, the battery pack according to the present disclosure may further include a heating pad 140, as shown in FIG. 2.

FIG. 3 is a perspective view which schematically illustrates the configuration of a cell cover included in a battery pack according to an embodiment of the present disclosure. Referring to FIG. 3, the cell cover 110 partially covers the exterior of at least one battery cell. The cell cover 110 may be configured to support the battery cell 10 housed therein. In particular, the cell cover 110 may be configured to stably support the upright state of the battery cell 10 housed therein. For this purpose, the cell cover 110 may be configured to cover both sides and either the upper side or the lower side of one battery cell 10 or a group of a plurality of battery cells 10. For example, the cell cover 110 may comprise two first cover parts 111 and a second cover part 112 (upper surface cover part) that surround one battery cell 10 or a group of battery cells 10 housed therein as shown in FIGS. 1, 2, and 3. At this time, the lower side is opened.

A pair of (two) first cover parts 111 cover both opposing sides of one battery cell 10 or a group of battery cells 10 housed therein. The second cover part 112 connects between the pair of first cover parts 111, and covers either the upper surface or the lower surface of one battery cell 10 or a group of battery cells 10 housed therein. Meanwhile, the present disclosure is not limited to those illustrated, and the second cover part 112 covers the lower side of the battery cell 10, and at this time, the upper side may be opened. Further, in the present disclosure, the second cover part 112 is not limited as covering the upper surface or the lower surface of the group of battery cells 10, and when the direction in which one battery cell 10 or a group of battery cells 10 housed inside the cell cover 110 is arranged is changed, the direction of the surface covered by the second cover part 112 can also be changed accordingly.

Further, the cell cover 110 has an opening part 113 on at least one of the front side and the rear side. An opening part can be provided at one end or both ends where the electrode leads 12 of the battery cell 10 housed in the cell cover 110 are located.

In summary, the cell cover 110 may have a structure that is open to the front, rear, and lower sides of one battery cell 10 or a group of battery cells 10 housed therein. In this case, the cross-sectional configuration of the cell cover 110 viewed from the front side can be said to be roughly similar to an 'n' shape. Therefore, in this case, the cell cover 110 may be called 'n-fin'. On the other hand, the present disclosure is not limited to those described above, and may have a structure that is open to the front, rear, and upper sides. That is, the cross-sectional configuration of the cell cover 110 viewed from the front side can be said to be roughly similar to a 'u' shape.

The cell cover 110 may be configured, for example, by bending one plate, so that two first cover parts 111 and the second cover part 112 are integrated. Alternatively, the two first cover parts 111 and the second cover part 112 may be produced each separately and then produced in a form in which they are coupled with each other. For example, the cell cover 110 may be coupled to the bottom surface of the pack case 300 using an adhesive or the like. At this time, the lower ends of the two first cover parts 111 of the cell cover 110 can be coupled to the bottom surface of the inside of the pack case 300.

Further, the cell cover 110 may be made from, for example, a metal material. In particular, the cell cover 110 may be made from steel material. Alternatively, the cell cover 110 may be made from SUS material. In this case, even if a flame occurs in a specific battery cell 10, the melting point of the cell cover 110 is high, thereby capable of more effectively preventing flames from being transmitted to the battery cells of the cell cover 110 adjacent to flame, etc.

The cell cover 110 may be formed to have a thickness of 0.01t to 0.4t as an example. Alternatively, the cell cover 110 may be formed to have a thickness of approximately 0.2t as an example.

Further, in the cell cover 110, an insulating film (not shown) may be attached to the first cover part 111 on both opposing sides and/or the second cover part 112 disposed on one of the upper and lower surfaces for electrical insulation. The insulating film can be attached to at least one of the inner and outer surfaces of the cell cover 110. The insulating film can be formed to have a thickness of 0.005t to 0.1t as an example. Alternatively, the insulating film can be formed to have a thickness of about 0.05t as an example. Further, as the material of the insulating film, for example, PI (polyimide), PC (polycarbonate), etc. can be attached. The thickness and material of the insulating film are not limited to those described above, and can be variously modified and changed depending on the environment to which the present disclosure is applied.

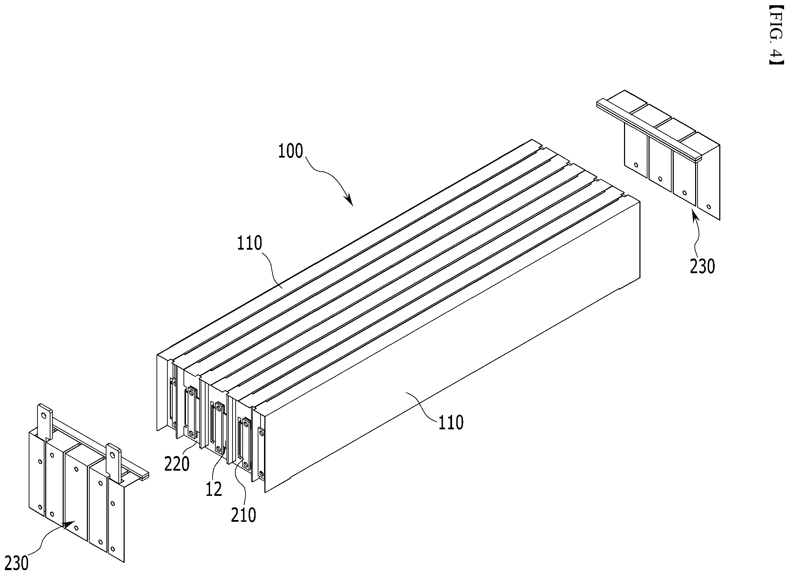

FIG. 4 is an exploded perspective view of a partial configuration of the battery pack of FIG. 1. FIG. 4 shows a case where the busbar frame assembly 200 is mounted on the front and rear surfaces of the cell module assembly 100, respectively. This shows a case where the blocking member 230, which is one component of the busbar frame assembly 200, is separated. Furthermore, in FIG. 4, for convenience of understanding, the insulating pads 130 disposed on both sides of the cell module assembly 100 and the resin layers 150 applied to the upper and lower surfaces of the cell module assembly 100 in the configuration of FIG. 1 are omitted from the illustration.

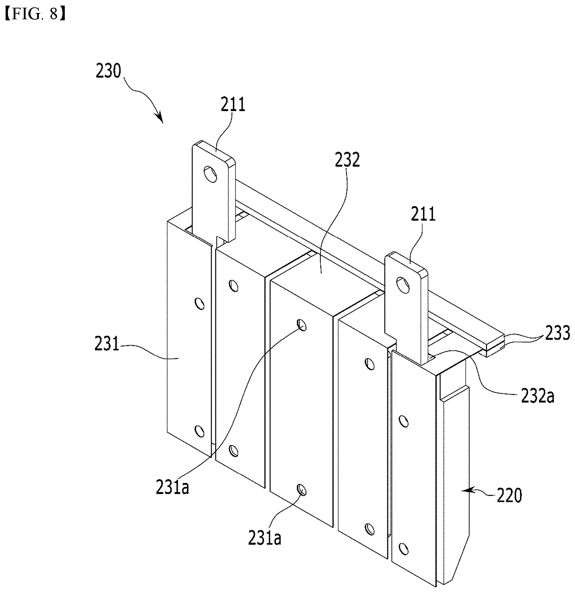

The busbar frame assembly 200 may include a busbar electrode 210, a busbar housing 220, and a blocking member 230. The busbar electrode 210 and the busbar housing 220 will be described with reference to FIGS. 5 to 7. Further, the blocking member 230 will be described with reference to FIGS. 8 to 10.

In FIG. 4 , the busbar frame assembly 200 may be coupled to at least one open side of the cell cover 110. For example, the busbar frame assembly 200 may be coupled to the open front end and rear ends of the cell cover 110.

Further, the busbar frame assembly 200 may be configured to block flame discharge in a specific direction. Moreover, the busbar frame assembly 200 may also be configured to block flame discharge in the upper and/or horizontal direction. Here, the horizontal direction may be a direction in which the electrode lead 12 is located, for example, the front-back direction.

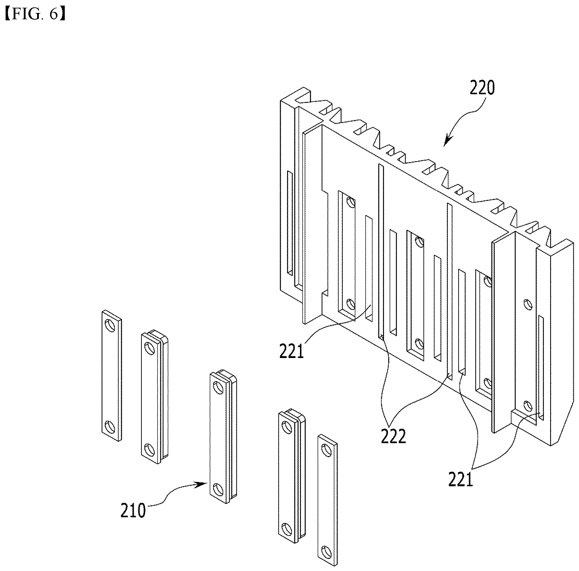

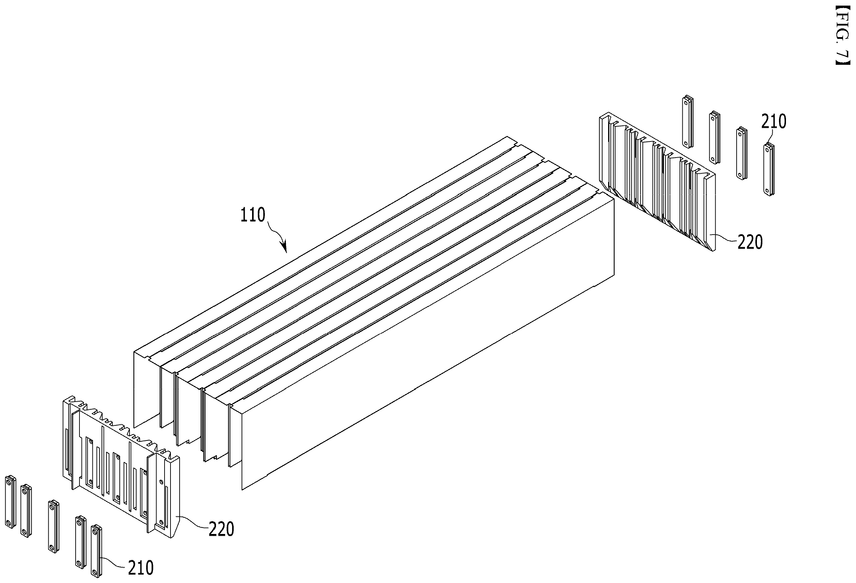

The busbar electrode 210 and the busbar housing 220 will be described with reference to FIG. 4 and further to FIGS. 5 to 7. FIG. 5 is a partial enlarged view of FIG. 4, which illustrates a case where the cell cover 110 is coupled to the busbar housing 220. FIG. 6 is an exploded perspective view of some components of FIG. 4, which illustrates the busbar electrode 210 and the busbar housing 220. FIG. 7 is an exploded perspective view of some components of FIG. 4, which illustrates the cell cover 110, the busbar electrode 210, and the busbar housing 220.

The bus bar electrode 210 may be made of an electrically conductive material, and may be configured to directly contact the electrode lead 12. The electrode lead 12 may pass through the lead slot 221 of the busbar housing 220 and be joined to the busbar electrode 210 outside the busbar housing 220. The busbar electrode 210 may be made of a material such as copper or aluminum. In particular, the busbar electrode 210 may be configured to maintain the contact state with the electrode lead 12 by welding or the like. The busbar electrode 210 of the busbar frame assembly 200 can electrically connect the electrode leads 12 to electrically connect the plurality of battery cells 10 in series and/or in parallel. Further, the busbar frame assembly 200 can be configured to be connected to a control module such as a BMS (battery management system) through the busbar electrode 210, and to transmit sensing information such as voltage. the busbar electrodes 210 may include a terminal busbar 211 as shown in FIGS. 1 and 8.

The busbar housing 220 may be made of an electrically insulating material such as plastic, and may be configured to support the busbar electrode 210. In particular, referring to FIGS. 5 and 6, the busbar housing 220 may be formed with a lead slot 221 or the like so that the electrode lead 12 can pass therethrough. The electrode lead 12 penetrates the lead slot 221 of the busbar housing 220, and is joined to the electrode lead 12 and the busbar electrode 210.

In addition, the busbar housing 220 may be further provided with a cell cover slot 222 so that the coupling with the cell cover 110 can be maintained in an airtight manner. The protrusion part 110a formed on the open end of the cell cover 110 of FIG. 3 may be fitted into the cell cover slot 222 of the busbar housing 220.

The number of the busbar electrodes 210 and the number of the lead slots 221 of the busbar housing 220 are not limited to those illustrated in the present disclosure, and can be modified and applied in various ways depending on the number of battery cells 10, the number of cell covers 110, the joining method between the electrode lead 12 and the busbar electrode 210, and the like. In addition, the number and arrangement of the cell cover slots 222 of the busbar housing 220 are not limited to those illustrated in the present disclosure, and can be modified and changed in various ways depending on the number of battery cells 10, the number of cell covers 110, the arrangement of the protrusions 110a of the cell covers 110, and the like. The arrangement of the protrusion parts 110a of each cell cover 110 in the plurality of cell covers 110 is not limited to those illustrated in FIG. 7, and can be modified and applied in various ways depending on the manner in which the invention is implemented.

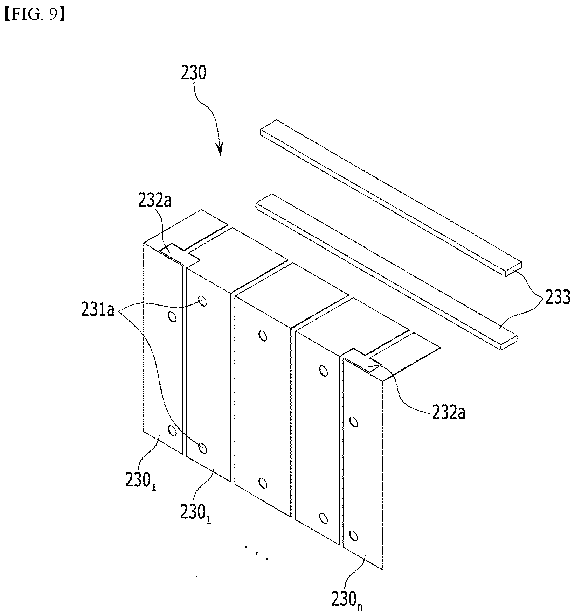

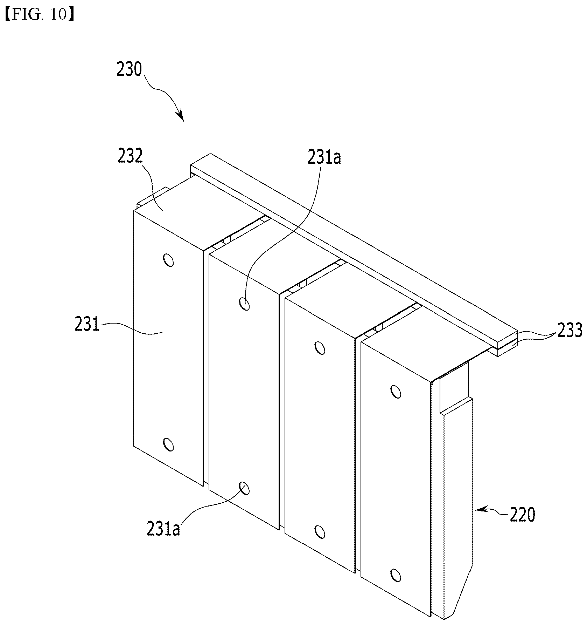

The blocking member 230 will be described with reference to FIG. 4 and further to FIGS. 8 to 10. FIG. 8 illustrates the front busbar frame assembly 200a including a blocking member 230. FIG. 9 is an exploded perspective view of some components of FIG. 8. FIG. 10 illustrates a busbar frame assembly 200b including a blocking member 230.

First, the blocking member 230 may be made of a material with a higher melting point than the busbar housing 220. For example, the blocking member 230 may be made of a metal material, particularly a steel material such as SUS. Further, the blocking member 230 may have a thickness of, for example, 0.05t to 0.5t or, for example, 0.3t, as an appropriate thickness in consideration of manufacturability and easy of assembly. In this case, the blocking member 230 does not melt or collapse even in the presence of high-temperature venting gas or flame, and can stably maintain its shape.

Further, referring to FIG. 4, the blocking member 230 may be located on one surface of the busbar housing 220. In particular, the blocking member 230 may be attached to the outer side surface of the busbar housing 220. Further, the blocking member 230 may be configured to block flame discharge. In particular, the blocking member 230 can prevent a venting gas discharged from the inside of the cell cover 110 from flowing in a horizontal direction such as a front-back direction or in an upward direction.

Referring to FIGS. 8 to 10, the blocking member 230 has a bent shape, and includes a main body 231 and an extension part 232. The cross section of the blocking member 230 can be said to be formed in an L shape when viewed from the side surface. The main body 231 and the extension part 232 may be integrally formed, or may be produced each separately and then produced in a form in which they are coupled with each other.

The main body 231 blocks venting gas (flame) from venting mainly in the horizontal direction. The extension part 232 blocks the venting gas (flame) from venting mainly in the vertical direction (in an upper direction in FIG. 4).

The main body 231 is attached to the outer surface of the busbar housing 220. The extension part 232 is configured in a form in which it is bent toward the cell cover 110 at the upper end or the lower end of the main body 231. The extension part 232 is bent toward the cell cover 110 at the upper end of the main body 231

The extension part 232 is disposed on the upper side of the front and rear ends of the cell cover 110, and may be located on the cell cover 110. Therefore, the front and rear ends of the upper surface of the battery cell 10 may be covered by the cell cover 110 and the extension part 232 in an overlapping manner.

In addition, the blocking member 230 is disposed on the end of the cell cover 110 and coupled to the cell cover 110. Thereby, the front and rear open portions of the cell cover 110 are sealed.

The busbar housing 220 is coupled to the front and rear open portions of the cell cover 110 (see FIG. 5, etc.). In the case where the blocking member 230 is not provided, vent gas may leak through the slots 221 and 222 of the busbar housing 220, or the gap between the front and rear coupling portions of the busbar housing 220 and the cell cover 110.

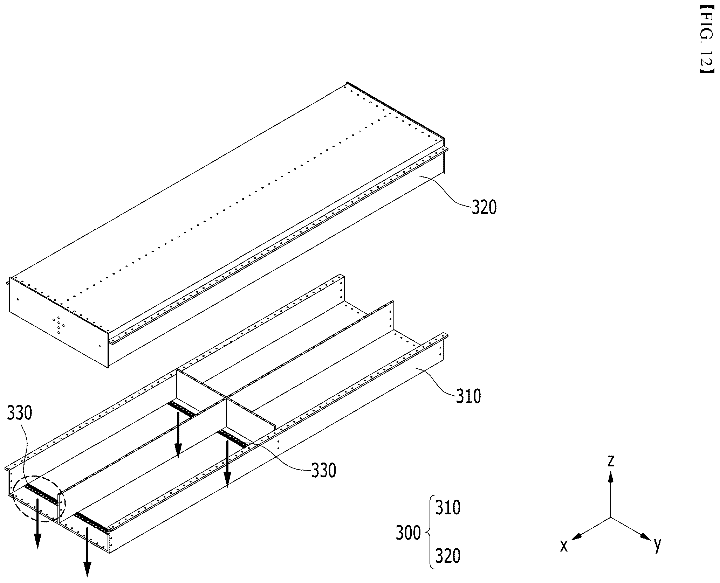

However, according to the present disclosure, the outer surface of the busbar housing 220 and the end of the cell cover 110 are covered with a blocking member 230, so that the cell cover 110 and the extension part 232 of the blocking member 230 overlap, which can prevent venting gas from being discharged into the gap between the cell cover 110 and the busbar frame assembly 200. Furthermore, such a venting gas can be prevented from leaking in an unintended direction (forward, backward or upward in FIG. 4) of the battery pack. Thereby, directional venting can be achieved as described later with reference to FIG.12.

Meanwhile, in the blocking member 230, the main body 231 and the extension part 232 may be integrally formed by bending one plate. For example, a part of one SUS plate may be bent, and the main body 231 and the extension part 232 may be divided on the basis of the bent part. Alternatively, the main body 231 and the extension part 232 may be integrally formed

Further, one or more blocking members 230 may be included in one busbar frame assembly 200. For example, a plurality of unit blocking members 230 may be arranged side by side in the left and right directions from the outside of the busbar housing 220. Alternatively, one blocking member 230 may be configured to cover the entire surface on the outside of the busbar housing 220.

The blocking member 230 includes a coupling hole 231a in the main body 231. As described above in FIGS. 4 and 5, the electrode lead 12 is joined to the busbar electrode 210 on the outer surface of the busbar housing 220, and then the blocking member 230 of FIG. 9 is mounted on the outer surface of the busbar housing 220, so that the busbar electrode 210, the busbar housing 220, and the blocking member 230 can be coupled together through the coupling hole 231a. At this time, the busbar electrode 210, the busbar housing 220, and the blocking member 230 may be coupled by bolt coupling or the like, but the present disclosure is not limited thereto, and they can be coupled by various methods.

Further, the blocking member 230 may further include a terminal busbar penetrating part 232a in the extension part 232 through which the terminal busbar 211 can penetrate. Even if the blocking member 230 covers the outer surface of the busbar housing 220, the terminal busbar 211 protrudes to the outside of the blocking member 230. Therefore, the cell module assembly 100 can be electrically connected to a BMS or the like through the terminal busbar 211 protruding outside the blocking member 230. The terminal busbar penetrating part 232a may be formed of a total of two electrodes, a cathode and an anode.

The shape, structure, and arrangement of the terminal busbar penetrating part 232a through which the terminal busbar 211 can penetrate are not limited to those illustrated in the present disclosure, and various modifications and changes can be made. Further, as shown in FIG. 8, the front busbar frame assembly 200a may be provided with a terminal busbar penetrating part 232a, but in some cases, it may be provided in the rear busbar frame assembly 200b. In addition, in some cases, various modifications and changes can be made, such as one each being provided in the front busbar frame assembly 200a and the rear busbar frame assembly 200b.

In addition, the blocking member 230 may further include a sealing member 233 at the end of the extension part 232. It is possible to prevent venting gas from leaking through a gap between the end of the extension part 232 and the cell cover 110. The sealing member 233 is provided in a pair, for example, as shown in FIG. 9, and may be provided at the upper and lower ends of the extension part 232 of the blocking member 230, respectively. However, various modifications and changes can be made, such as one sealing member 233 being provided only at either the upper or lower end of the extension part 232.

Further, for example, the blocking member 230 may be composed of a plurality of sub-blocking members 230₁, 230₂, ..., 230ₙ. A gap is formed between each of the plurality of sub-blocking members 230₁, 230₂, ..., 230ₙ, so that the protrusion part 110a of the cell cover 110 described above may be coupled. Although the number of sub-blocking members of the front busbar frame assembly 200a in FIG. 8 and the number of sub-blocking members of the rear busbar frame assembly 200b in FIG. 10 are illustrated to be different, the present disclosure is not limited to those illustrated, and various modifications and changes are possible. That is, various modifications and changes can be made depending on the shape of the front and rear protrusion parts 110a of the cell cover 110 constituting the cell module assembly 100 and the shape of the front and rear busbar housing 220 of the busbar frame assembly 200.

Further, the present disclosure does not necessarily have to consist of a plurality of sub-blocking members (230₁, 230₂, ..., 230ₙ) as shown in the figure, but various modifications and changes can be made, such as one blocking member 230 being integrally formed to cover even the protrusion part 110a of the cell cover 110.

FIG. 10 shows the busbar frame assembly 200b at the rear of the battery pack of FIG. 1, and the description of each component overlaps with the description of each component of the front busbar frame assembly 200a of the battery pack in FIG. 8, and thus, refer to the above description.

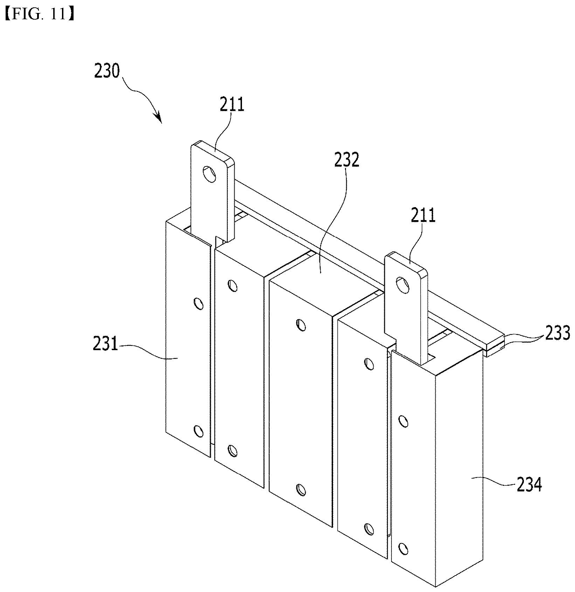

FIG. 11 is a perspective view which schematically illustrates a partial configuration of an embodiment in which the blocking member 230 of FIG. 8 is modified as another embodiment of the present disclosure. The blocking member 230 of FIG. 12 further includes extension parts 234 bent toward the cell cover 110 at both ends of the main body 231. The extension part 234 may be located on both sides of the front and rear ends of the cell cover 110. In this case, the front and rear ends of both sides of the battery cell 10 may be covered by the cell cover 110 and the extension part 234 in an overlapping manner. The extension part 234 may be provided in a pair.

The cell cover 110 and the extension parts 232 and 234 of the blocking member 230 overlap, thereby capable of preventing the venting gas from being discharged through the gap between the cell cover 110 and the busbar frame assembly 200.

For further description of the blocking member 230 of FIG. 11, refer to the description of the extension part 232 described above with reference to FIGS. 1 to 10. In addition, the rear busbar frame assembly 200b of FIG. 10 may further include extension parts 234 bent toward the cell cover 110 at both ends of the main body 231 in the same manner, and various variations and changes are possible.

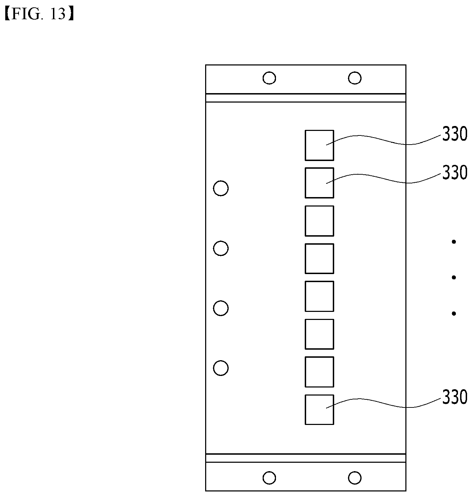

Next, referring to FIGS. 12 and 13, directional venting of the battery pack of the present disclosure will be described.

Venting gas is discharged to a surface that is not blocked by the blocking member 230 among the open surface of the cell cover 110. For example, the cell cover 110 and the busbar frame assembly 200 may be configured to discharge venting gas inside the pack in a lower direction. For example, the cell cover 110 may be in the form of an n-fin, and may be configured such that the battery cells 10 housed inside are sealed at the top, left and right, and opened at the front, rear and bottom. At this time, the front and rear sides of the cell cover 110 may be covered or sealed by the busbar frame assembly 200. Therefore, the internal housing space formed by the cell cover 110 and the busbar frame assembly 200 can be opened only in the lower direction. Therefore, when venting gas and flames occur from the battery cell 10 housed in the internal space, gases, flames, etc. can only be discharged in the lower direction. In this case, a directional venting structure in which the venting gas, etc. is discharged in a lower direction can be achieved. In particular, when venting gas is discharged, sparks such as active material particles may be included. According to the implementation configuration, the venting path is formed to be bent, so that external discharge of active material particles or flames can be suppressed.

Further, the battery pack according to the present disclosure may further include a pack case 300 having an internal space, as shown in FIG. 12. Here, the cell module assembly 100 including a plurality of battery cells 10 and the cell cover 110, the busbar frame assembly 200, and the like may be housed in the internal space of the pack case 300. Further, the pack case 300 may include, for example, a lower case 310 and an upper case 320, but the present disclosure is not limited thereto, and can be realized by various modifications and changes as long as it has a form that can house the cell module assembly 100 therein.

In particular, as shown in FIGS. 12 and 13, the pack case 300 may have at least one venting hole 330 formed at the bottom for discharging venting gas inside the cell cover 110. FIG. 13 is an enlarged view of the portion (dotted line) of the pack case 300 of FIG. 12 where the venting hole 330 is disposed. Here, the venting hole 330 of the pack case 300 may be configured to communicate with the internal space of the cell cover 110. That is, a cell module assembly 100 including a cell cover 110 and a plurality of battery cells 10 is seated on the bottom of the pack case 300, wherein the venting gas discharged from the battery cell 10 is blocked from being discharged upward and horizontally by the cell cover 110 and the busbar frame assembly 200, and as shown by the arrow, it can be discharged only in the lower direction through the venting hole 330 of the pack case 300. In such an implementation configuration, a direct venting structure in the lower direction can be achieved through the cell cover 110, the busbar frame assembly 200, and the pack case 300.

Additionally, the battery pack according to the present disclosure may further include a control module (not shown) configured to control charge/discharge of the battery cells 10. This control module may include a battery management system (BMS), and may be stored inside the pack case 300 along with the battery cell 10 and the cell cover 110.

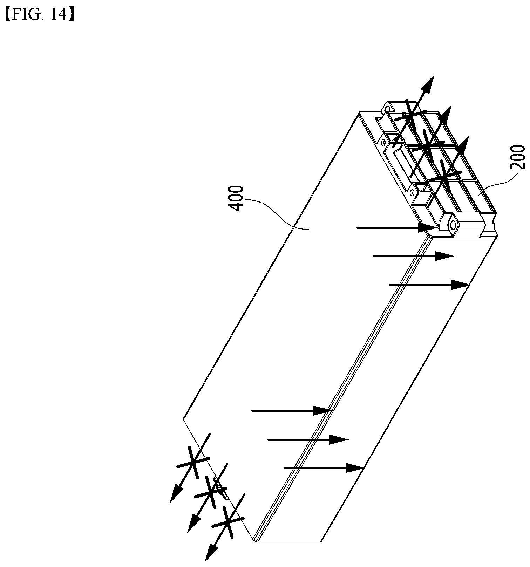

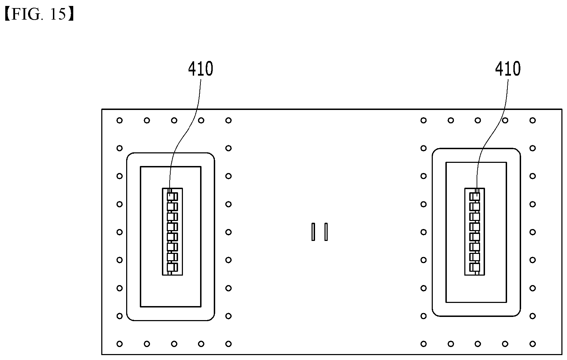

Meanwhile, one or more battery modules may be stored in the battery pack. The battery module will be described with reference to FIGS. 14 and 15. At this time, the configurations described in the various embodiments described above, particularly the cell module assembly 100 including the battery cell 10 and the cell cover 110 and the busbar frame assembly 200 can be applied to the battery module, and thus, description of the overlapping content will be omitted, and please refer to the contents described above with reference to FIGS. 1 to 13.

FIG. 14 is a diagram schematically illustrating directional venting in a battery module according to an embodiment of the present disclosure. FIG. 15 is a diagram illustrating the lower surface of a battery module according to an embodiment of the present disclosure.

The battery module according to another aspect of the present disclosure is a battery module that is housed by at least one in an internal space of a pack case 300, wherein the battery module may comprise a plurality of battery cells 10 each having an electrode lead 12; a cell cover 110 provided to at least partially surround at least some battery cells 10 among the plurality of battery cells 10; a busbar frame assembly 200 configured to be electrically connected to the electrode lead 12 and coupled to at least one side of the cell cover 110 as at least one side of the cell module assembly 10 (e.g., one side or two opposing sides provided with the electrode lead 12) to block flame discharge in a particular direction; and a module case 400 that houses the cell module assembly 100 including a plurality of battery cells 10 and cell covers 110 in its internal space.

The module case 400 may be configured in a form in which at least a portion is opened, and the busbar frame assembly 200 may be coupled to an opening part of module case 400. For example, the module case 400 may be configured in a form of a mono frame in which the upper, lower, left, and right sides are closed and the front and rear sides are opened on the basis of the inner space. At this time, the busbar frame assembly 200 may be coupled to the front and rear opening parts of the module case 400.

Further, as shown in FIG. 15, the module case 400 may have at least one venting hole 410 formed at the bottom for discharging venting gas inside the cell cover 110. Further, the venting hole 410 of the module case 400 may be configured to communicate with the housing space of the cell cover 110 housed inside the module case 400. In such an implementation configuration, when venting gas, etc. is generated from the battery cell 10 housed inside the cell cover 110, the generated venting gas may be discharged to the bottom rather than to the top or front and rear sides as shown in FIG. 15.

In addition, in the case of the cell module assembly 100 including a plurality of battery cells 10 and the cell cover 110 and the busbar frame assembly 200 included in the battery module, the previous description of the battery pack can be applied in the same or similar manner, and thus, detailed description thereof will be omitted.

On the other hand, according to yet another aspect of the present disclosure, there can be provided an automobile comprising a battery pack or battery module according to the present disclosure.

The present disclosure has been described in detail with reference to non-limiting embodiments and drawings. However, it should be understood that the detailed description and specific examples, while indicating preferred embodiments of the disclosure, are given by way of illustration only, since various changes and modifications within the spirit and scope of the disclosure will become apparent to those skilled in the art from this detailed description.

### [Description of Reference Numerals]

10: battery cell
12: electrode lead
100: cell module assembly
110: cell cover
111: first cover part
112: second cover part
113: opening part
120: thermal barrier
130: insulating pad
140: heating pad
150: resin layer
200: busbar frame assembly
210: busbar electrode
220: busbar housing
230: blocking member
231: main body
232: extension part
233: sealing member
234: extension part
300: pack case
310: lower case
320: upper case
330: venting hole
400: module case
410: venting hole

## Claims

1. A battery pack comprising:
a plurality of battery cells stacked in one direction;
a pack case that houses the battery cells in its internal space;
a cell cover that at least partially surrounds at least some of the plurality of battery cells in the internal space of the pack case; and
a busbar frame assembly disposed on at least one open side of the cell cover,
wherein the busbar frame assembly comprises a blocking member that blocks venting gas from being discharged from the battery cells.

2. The battery pack according to claim 1, wherein:
the venting gas is discharged to a surface that is not blocked by the blocking member among the open surface of the cell cover.

3. The battery pack according to claim 1, wherein:
the blocking member has a bent shape, and comprises a main body disposed on the least one open side of the cell cover, and an extension part that covers an end of the cell cover.

4. The battery pack according to claim 3, wherein:
the cell cover and the extension part of the blocking member overlap, thereby preventing the venting gas from being discharged through a gap between the cell cover and the busbar frame assembly.

5. The battery pack according to claim 1, wherein:
the busbar frame assembly further comprises a busbar electrode electrically coupled to an electrode lead of the battery cell, and a busbar housing that supports the busbar electrode, and
the blocking member is mounted on the outer surface of the busbar housing.

6. The battery pack according to claim 1, wherein:
the cell cover comprises a pair of first cover parts that cover both opposing sides of at least some of the battery cells, and a second cover part that connect between the pair of first cover parts and covers either an upper surface or a lower surface of the at least some of the battery cells.

7. The battery pack according to claim 6, wherein:
the busbar frame assembly is disposed on at least one of a front surface and a rear surface of the battery cell, and
the blocking member comprises a main body disposed on at least one of the front surface and the rear surface of the battery cell, and an extension part that covers an end of the second cover part of the cell cover.

8. The battery pack according to claim 7, wherein:
the blocking member further comprises an extension part that covers an end of the first cover part of the cell cover.

9. The battery pack according to claim 5, wherein:
the pack case comprises at least one venting hole for discharging the venting gas, and
the venting hole is provided on a surface side where the cell cover is opened among an upper surface and a lower surface of the pack case.

10. The battery pack according to claim 1, wherein:
the cell cover and the group of battery cells housed in the cell cover are formed in a plurality of numbers to be mounted in the inner space of the pack case, and
one busbar frame assembly is disposed on at least one open side of the plurality of cell covers, respectively.

11. The battery pack according to claim 1, wherein:
the blocking member has an L-shaped cross section when viewed from the side surface.

12. The battery pack according to claim 1, wherein:
the cell cover has an n-shaped or u-shaped cross section when viewed from the front.

13. A battery module comprising:
a plurality of battery cells stacked in one direction;
a module case that houses the battery cells in its internal space;
a cell cover that at least partially surrounds at least some of the plurality of battery cells in the internal space of the pack case; and
a busbar frame assembly disposed on at least one open side of the cell cover,
wherein the busbar frame assembly comprises a blocking member that blocks venting gas from being discharged from the battery cells.
